# FASCICULE DE BREVET EUROPEEN

(11) **EP 1 374 164 B1**
(45) Date de publication et mention de la délivrance du brevet: **17.05.2006**
(21) Numéro de dépôt: 02724373.2
(22) Date de dépôt: 20.03.2002
(51) Int. Cl.: G06K 19/14, G06K 19/06

(54) **DISPOSITIF ET PROCEDE DE SECURISATION PERSONNELLE D'UN SUPPORT D'INFORMATION**
VORRICHTUNG UND VERFAHREN ZUR PERSÖNLICHEN SICHERUNG EINES DATENTRÄGERS
DEVICE AND METHOD FOR THE PERSONAL SECURING OF A DATA MEDIUM

(30) Priorité: 21.03.2001 FR 0103986
(43) Date de publication de la demande: 02.01.2004
(73) Titulaire: GEMPLUS, 13881 Gémenos (FR)
(72) Inventeur: BRUNET, Olivier, Bâtiment Melia, 13012 Marseille (FR)
(86) Numéro de dépôt international: PCT/FR2002/000981
(87) Numéro de publication internationale: WO 2002/075648

(56) Documents cités:
- EP-A- 0 878 244
- WO-A-96/15912
- US-A- 5 479 026

## Description

La présente invention concerne un dispositif de sécurisation personnelle d'un support d'information et un procédé de réalisation de celui-ci.

Il est connu de pourvoir les supports d'information, par exemple les cartes à puce, d'éléments de sécurisation par exemple d'hologrammes, d'OVI (en anglais Optical Variable Ink : encre optique variable), d'impression en guilloche, etc....

L'invention se rapporte plus précisément à un dispositif de sécurisation personnelle d'un support dinformation comportant une zone d'information personnelle dans le support.

Il est important en effet de prévoir un élément sécurisé pouvant être mis en place sur le support en fin de fabrication afin de diminuer les risques de vol sur les sites de production. Dans ce cas, la pose de l'élément de sécurisation est effectuée de façon décentralisée.

Il est connu de réaliser un tel élément de sécurisation personnelle par laser. Une zone avec des cellules en relief est réalisée sur le support et ensuite traitée avec deux lasers simultanément avec des angles d'incidence différents. L'on obtient alors une zone d'information avec des informations différentes selon l'angle d'incidence du support par rapport à l'oeil du type appelé couramment « movie card ».

Ce type de sécurisation a pour inconvénient d'être particulièrement coûteux.

Le document WO 96 15912 A décrit un support d'information comportant une zone d'information dans ledit support; ce dispositif est constitué d'une pluralité de lentilles optiques en un matériau transparent disposés sur ladite zone selon un motif dans une couche de matière plastique transparente. Les lentilles peuvent être sphériques.

L'invention propose un dispositif de sécurisation personnelle bon marché et particulièrement fiable conforme à l'objet de la revendication 1.

Un avantage de ce dispositif est que nécessairement un lecteur optique calibré, c'est-à-dire avec compatibilité entre la lumière du lecteur et les caractéristiques des lentilles, doit être utilisé pour lire le motif. En effet, si un autre lecteur est utilisé, la reconnaissance ne peut être réalisée. Ceci renforce la sécurité du dispositif.

Un autre avantage de ce dispositif est que sans apport de lumière à l'état non lu, il est totalement transparent et invisible.

Egalement, il est possible de modifier les caractéristiques optiques du matériau pour chaque utilisateur ou pour chaque application. Ainsi un lecteur ne lira que le motif personnel d'un seul utilisateur ou d'une seule application.

Avantageusement, la zone peut être transparente ou réfléchissante.

Ceci permet une application autant sur les supports d'information type cartes à puces en matériau transparent en totalité ou partiellement que sur les supports réfléchissants, par exemple revêtus d'une couche d'argent de type support d'hologramme.

La caractéristique peut être l'indice de réfraction optique du matériau, le diamètre dess micro-lentilles ou la caractéristique sphérique dess micro-lentilles.

Selon un mode de réalisation préféré, le dispositif est revêtu d'une couche de matière transparente d'indice de réfraction différent de celui du matériau.

Ceci permet de protéger les micro-lentilles de la détérioration par grattage par exemple.

L'invention se rapporte également à un procédé de réalisation d'un tel dispositif, selon lequel les micro-lentilles sont appliquées par jet de gouttes du matériau.

Le procédé de jet de gouttes comparable au procédé par jet d'encre en matière d'impression a l'avantage d'être peu coûteux, flexible et sans contact. Ce procédé par jet de gouttes est un procédé très largement utilisé pour la personnalisation de documents et l'invention est donc compatible avec une technologie existante faisant office de standard.

Il permet notamment d'effectuer une impression numérique différente pour chaque objet imprimé, ce qui permet une personnalisation de chaque objet.

Des caractéristiques différentes des micro-lentilles du dispositif peuvent être obtenues simplement en modifiant le signal électrique de l'injection responsable du volume et de la forme des micro-lentilles. Après projection des gouttes, si besoin, diamètre, forme et caractéristiques optiques des micro-lentilles peuvent être ajustés.

Ainsi, pour une tête de jet de gouttes et un matériau donné, la modification du signal électrique appliqué au matériau piezo-électrique permettra de faire varier le volume des gouttes et leur vitesse. L'on peut ainsi changer les caractéristiques géométriques des micro-lentilles.

Ces caractéristiques géométriques peuvent également être modifiées par variation de la tension de surface du matériau constituant les micro-lentilles.

Avantageusement, le motif peut être codé par cryptologie.

L'invention est décrite ci-après plus en détail à l'aide de figures ne représentant que des modes de réalisation préférés de l'invention.
La figure 1 est une vue de face d'un dispositif conforme à l'invention avec un exemple de motif personnel.
Les figures 2A et 2B sont des vues en coupe schématique d'un dispositif conforme à l'invention lu par un lecteur optique.
La figure 3 est une vue en coupe transversale d'un dispositif conforme à l'invention selon une variante de réalisation.
La figure 4 est une vue schématique en perspective d'un agencement de réalisation de l'invention par jet de gouttes.

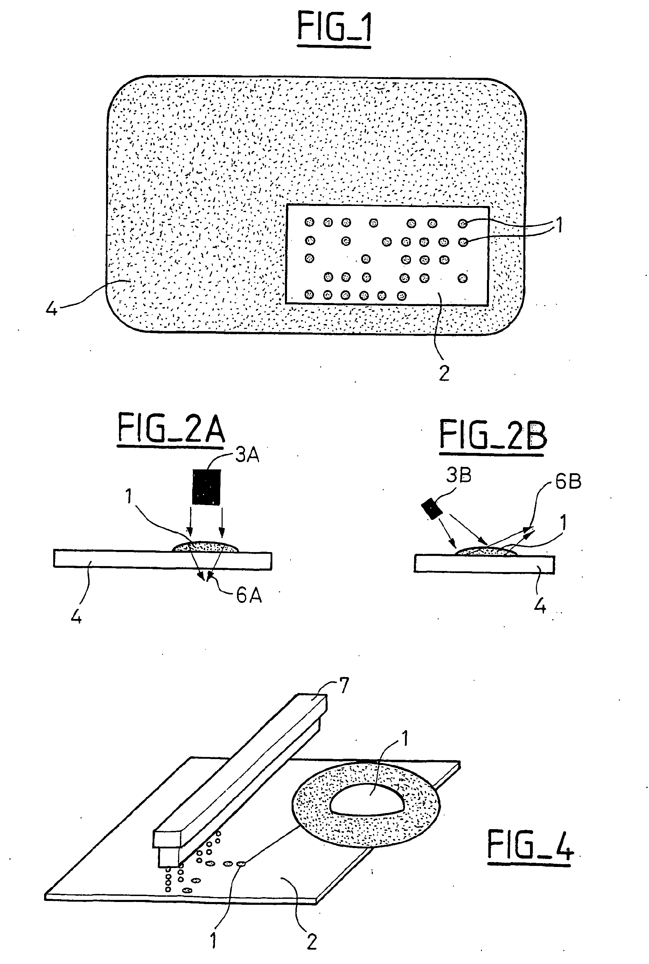

Le dispositif de sécurisation personnelle conforme à l'invention représenté sur la figure 1 est constitué d'une pluralité de micro-lentilles optiques 1 en matériau transparent disposées sur une zone 2 d'un support d'information 4, par exemple une carte à puce ou un disque compact, pour former un motif.

Une grande variété de polymères peut être utilisée pour la fabrication des micro-lentilles. Avantageusement, l'on utilisera des résines liquides polymérisables aux UV et d'indice de réfraction calibré. Par exemple les produits commercialisés par la société ABLESTIK nommés « LUXTRACK 4041 » ou « LUSTRACK 4037 » sont utilisés.

Ce motif est la donnée personnelle de l'utilisateur du support. Dans ce motif, chaque micro-lentille 1 forme un point. Il peut être de fantaisie constitué d'une chaîne de points comme ici représenté ou constitué par un code barres.

La zone 2 est transparente.

Ce motif est lisible par un lecteur optique 3A calibré à au moins une caractéristique des micro-lentilles 1 et disposé d'un côté du support 4, du côté de la face portant les micro-lentilles 1, comme représenté sur la figure 2A. Le motif est alors visible du côté 6A du support 4 opposé à la face portant les micro-lentilles 1.

Cette caractéristique peut être l'indice de réfraction optique du matériau, le diamètre des micro-lentilles ou la caractéristique sphérique des micro-lentilles.

Selon une variante, le lecteur peut être disposé sur la face opposé de la zone transparente du support et le motif être lu du côté de la zone portant les micro-lentilles.

Le lecteur optique est constitué de façon classique d'une pluralité de diodes électroluminiscentes.

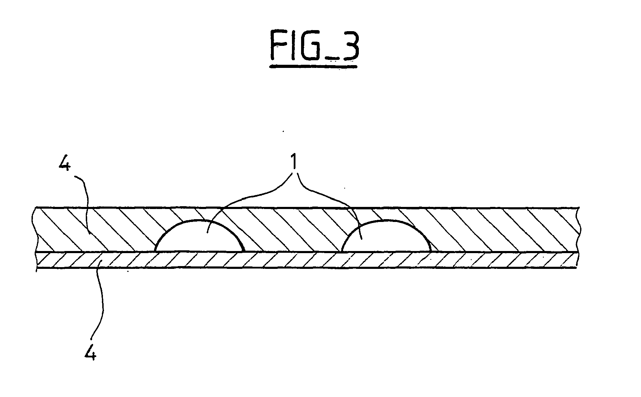

Afin de protéger les micro-lentilles de la détérioration par grattage par exemple, le dispositif peut être revêtu d'une couche 5 de matière transparente d'indice de réfraction différent de celui du matériau, comme représenté sur la figure 3.

Cette couche de protection est avantageusement un vernis déposé par tout type de technique d'impression. Tout vernis peut être utilisé à condition d'avoir un indice de réfraction très différent de celui du matériau des micro-lentilles.

Selon le procédé de réalisation conforme à l'invention, les micro-lentilles 1 sont appliquées par jet de gouttes du matériau comme représenté sur la figure 4. Une barre d'injection 7 balaie à une certaine vitesse la zone 2 où un motif de micro-lentilles 1 doit être réalisé et par signal électrique, jette des gouttes de matériau avec un certain volume et une certaine vitesse.

La taille des gouttes est de l'ordre de 20 à 100 micromètres de diamètre, de préférence 40 à 80 micromètres.

Avantageusement, le motif peut être codé par cryptologie

La zone 2 du support peut également être réfléchissante. Dans ce cas représenté sur la figure 2B, le lecteur optique 3B est disposé du côté de la face portant les micro-lentilles 1. Dans ce cas, on positionne le lecteur optique 3B de telle sorte que son faiseau optique soit décentré par rapport à l'axe de symétrie des micro-lentilles 1 et le motif est visible en un point 6B symétriquement décalé par rapport à cet axe de symétrie.

Typiquement, dans le cas d'un disque compact portant des micro-lentilles, le lecteur peut être constitué par le laser utilisé pour lire le contenu du disque compact lui-même. Il n'est dans ce cas pas nécessaire de prévoir un lecteur spécifique pour lire le motif formé par les micro-lentilles.

Le lecteur a pour fonction de donner à son utilisateur ou à un dispositif d'identification une indication relative à l'authenticité du support d'information. A titre d'exemple, dans le cas d'un disque compact, le lecteur comporte un dispositif d'authentification destiné à vérifier que le disque est bien un disque original et non une copie. Cette authentification peut consister à vérifier que le motif correspond bien à un motif attendu, par exemple à un motif standard caractérisant les disques originaux provenant d'éditeurs, ou à un motif correspondant à des informations lues parmi les informations contenues dans le support. Dans ce second cas, il peut donc s'agir d'une comparaison du motif optique avec des informations numériques, par exemple noyées parmi celles figurant dans le support.

Dans le cas d'une carte à puce, il est possible d'authentifier la carte en comparant les informations optiques avec des informations lues dans la puce de la carte. Il est également possible, par exemple dans le cas d'un contrôle d'accès, de comparer les informations optiques avec un code entré manuellement par l'utilisateur sur un clavier à touches coopérant avec le lecteur optique.

Les informations optiques peuvent donc être assimilées à un code-barre et les applications des codes-barres font partie intégrante de l'invention décrite ci-dessus.

D'autres applications à la portée de l'homme du métier sont possibles.

## Revendications

1. Dispositif de sécurisation personnelle d'un support d'information (4) comportant une zone d'information personnelle (2) dans ledit support, ledit dispositif étant constitué d'une pluralité de micro-lentilles optiques (1) en un matériau transparent sur ladite zone et formant un motif personnel, **caractérisé en ce que** chaque micro-lentille est formée par une goutte du dit matériau disposé à la surface du support selon ledit motif dans lequel chaque micro-lentille forme un point.

2. Dispositif selon la revendication 1, **caractérisé en ce que** les micro-lentilles présentent des caractéristiques personalisées.

3. Dispositif selon la revendication 1, **caractérisé en ce que** ladite zone (1) est transparente.

4. Dispositif selon la revendication 1, **caractérisé en ce que** ladite zone (1) est réfléchissante.

5. Dispositif selon la revendication 2, **caractérisé en ce que** lesdites caractéristiques comprennent l'indice de réfraction optique du matériau.

6. Dispositif selon la revendication 2, **caractérisé en ce que** lesdites caractéristiques comprennent le diamètre desdites micro-lentilles (1).

7. Dispositif selon la revendication 2, **caractérisé en ce que** lesdites caractéristiques comprennent la caractéristique sphérique desdites micro-lentilles (1).

8. Dispositif selon l'une des revendications précédentes, **caractérisé en ce qu'**il est revêtu d'une couche (5) de matière transparente d'indice de réfraction différent de celui dudit matériau.

9. Dispositif selon l'une quelconque des revendications précédentes , **caractérisé en ce que** le support d'information (4) est une carte à puce.

10. Dispositif selon quelconque des revendications précédentes, **caractérisé en ce que** le support d'information (4) est un disque compact.

11. Support d'information (4) comportant un dispositif selon l'une des revendications précédentes, **caractérisé en ce qu'**il est constitué par une carte à puce.

12. Support d'information (4) comportant un dispositif selon l'une des revendications précédentes, **caractérisé en ce qu'**il est constitué par un disque compact.

13. Procédé de réalisation d'un dispositif de sécurisation personnelle d'un support d'information comportant une zone d'information personnelle dans ledit support, ledit dispositif étant constitué d'une pluralité de micro-lentilles optiques en un matériau transparent formant un motif personnel, **caractérisé en ce que** les micro-lentilles sont appliquées à la surface du support par jet de gouttes dudit matériau.

14. Procédé selon la revendication 13, **caractérisé en ce que** le motif est codé par cryptologie.

## Claims

1. A personal security device for an information medium (4) comprising a personal information area (2) in the said medium, the said device consisting of a plurality of optical microlenses (1) made from a transparent material on the said area and forming a personal pattern, **characterised in that** each microlens is formed by a droplet of the said material disposed on the surface of the medium in the said pattern in which each microlens forms a dot.

2. A device according to claim 1, **characterised in that** the microlenses have personalised characteristics.

3. A device according to claim 1, **characterised in that** each area (1) is transparent.

4. A device according to claim 1, **characterised in that** the said area (1) is reflective.

5. A device according to claim 2, **characterised in that** the said characteristics comprise the optical refractive index of the material.

6. A device according to claim 2, **characterised in that** the said characteristics comprise the diameter of the said microlenses (1).

7. A device according to claim 2, **characterised in that** the said characteristics comprise the spherical characteristic of the said microlenses (1).

8. A device according to one of the preceding claims, **characterised in that** it is covered with a layer (5) of transparent material with a refractive index different from that of the said material.

9. A device according to any one of the preceding claims, **characterised in that** the information medium (4) is a chip card.

10. A device according to any one of the preceding claims, **characterised in that in that** the information medium (4) is a compact disc.

11. An information medium (4) comprising a device according to one of the preceding claims, **characterised in that** it consists of a chip card.

12. An information medium (4) comprising a device according to one of the preceding claims, **characterised in that** it consists of a compact disc.

13. A method of producing a personal security device for an information medium comprising a personal information area in the said medium, the said device consisting of a plurality of optical microlenses made from a transparent material forming a personal pattern, **characterised in that** the microlenses are applied to the surface of the support by droplet jet of the said material.

14. A method according to claim 13, **characterised in that** the pattern is coded by cryptology.

## Patentansprüche

1. Persönliche Sicherungsvorrichtung eines Datenträgers (4), welcher einen persönlichen Datenbereich (2) auf besagtem Träger umfasst, wobei besagte Vorrichtung aus einer Vielzahl optischer Mikrolinsen (1) aus transparentem Material auf besagtem Bereich besteht, welche ein persönliches Motiv bilden, **dadurch gekennzeichnet, dass** jede Mikrolinse durch einen Tropfen besagten Materials gebildet wird und an der Oberfläche des Trägers entsprechend besagten Motiv, in welchem jede Mikrolinse einen Punkt bildet, angeordnet ist.

2. Vorrichtung gemäß Patentanspruch 1, **dadurch gekennzeichnet, dass** die Mikrolinsen personalisierte Besonderheiten haben.

3. Vorrichtung gemäß Patentanspruch 1, **dadurch gekennzeichnet, dass** besagter Bereich (1) transparent ist.

4. Vorrichtung gemäß Patentanspruch 1, **dadurch gekennzeichnet, dass** besagter Bereich (1) reflektierend ist.

5. Vorrichtung gemäß Patentanspruch 2, **dadurch gekennzeichnet, dass** besagte Besonderheiten der Brechungsindex des Materials sein können.

6. Vorrichtung gemäß Patentanspruch 2, **dadurch gekennzeichnet, dass** besagte Besonderheiten der Durchmesser besagter Mikrolinsen (1) sein können.

7. Vorrichtung gemäß Patentanspruch 2, **dadurch gekennzeichnet, dass** besagte Besonderheiten die Rundheit besagter Mikrolinsen (12) sein können.

8. Vorrichtung nach einem der vorhergehenden Ansprüche, **dadurch gekennzeichnet, dass** sie mit einer transparenten Schicht (5) überzogen ist, deren Brechungsindex vom Brechungsindex besagten Materials abweicht.

9. Vorrichtung nach einem der vorhergehenden Ansprüche, **dadurch gekennzeichnet, dass** der Datenträger (4) eine Chipkarte ist.

10. Vorrichtung nach einem der vorhergehenden Ansprüche, **dadurch gekennzeichnet, dass** der Datenträger eine Compact Disc ist.

11. Datenträger (4), welcher eine Vorrichtung nach einem der vorhergehenden Ansprüche umfasst, **dadurch gekennzeichnet, dass** er aus einer Chipkarte besteht.

12. Datenträger (4), welcher eine Vorrichtung nach einem der vorhergehenden Ansprüche umfasst, **dadurch gekennzeichnet, dass** er aus einer Compact Disc besteht.

13. Verfahren zur Herstellung einer persönlichen Sicherungsvorrichtung eines Datenträgers, der einen persönlichen Datenbereich auf besagtem Träger enthält, wobei besagte Vorrichtung aus einer Vielzahl optischer Mikrolinsen aus transparentem Material besteht, welche ein persönliches Motiv bilden, **dadurch gekennzeichnet, dass** die Mikrolinsen auf der Oberfläche des Trägers durch Aufstrahlen von Tropfen besagten Materials aufgetragen werden.

14. Verfahren nach Anspruch 13, **dadurch gekennzeichnet, dass** das Motiv kryptologisch verschlüsselt ist.
